(19) **Europäisches Patentamt**
**European Patent Office**
**Office européen des brevets**

(11) **EP 2 748 018 B1**

(12) **EUROPEAN PATENT SPECIFICATION**

(45) Date of publication and mention
of the grant of the patent:
**15.02.2017 Bulletin 2017/07**

(51) Int Cl.:
***B60C 11/12*** *(2006.01)*

(21) Application number: **12834915.6**

(86) International application number:
**PCT/US2012/053773**

(22) Date of filing: **05.09.2012**

(87) International publication number:
**WO 2013/048682 (04.04.2013 Gazette 2013/14)**

(54) **TIRE WITH TREAD HAVING IMPROVED SNOW AND DRY TRACTION**

TREIFEN MIT LAUFFLÄCHE MIT VERBESSERTER HAFTUNG AUF SCHNEE UND TROCKENEN FLÄCHEN

PNEU DOTÉ DE BANDE DE ROULEMENT AYANT UNE TRACTION À SEC ET SUR LA NEIGE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011 PCT/US2011/053980**

(43) Date of publication of application:
**02.07.2014 Bulletin 2014/27**

(73) Proprietors:
• **Michelin Recherche et Technique S.A.**
**1763 Granges-Paccot (CH)**
• **Compagnie Générale des Établissements Michelin**
**1763 Granges-Paccot (CH)**

(72) Inventors:
• **GUICHON, Cyril**
**F-63560 Beauregard-vendon (FR)**

• **PIFFARD, Olivier**
**Maudlin, SC 29662 (US)**

(74) Representative: **Casalonga**
**Casalonga & Partners**
**Bayerstraße 71/73**
**80335 München (DE)**

(56) References cited:
EP-A1- 1 491 366      EP-A2- 0 890 456
EP-B1- 0 718 125      WO-A1-2008/065947
WO-A1-2011/062595     WO-A1-2011/111394
DE-A1- 10 128 592     DE-A1-102006 052 740
JP-A- 2007 153 056    US-A- 4 580 609
US-A1- 2006 169 376   US-A1- 2009 165 911
US-A1- 2011 180 189   US-B1- 6 446 689

**Description**

BACKGROUND OF THE INVENTION

Field of the Invention

This invention relates generally to tires having treads that have a configuration and/or properties for providing suitable snow and dry traction, and, more specifically, to a tire that has a tread that has a maximum value for sipe density in the contact patch, a minimum value for lateral groove density in the contact patch, and a minimum value for the longitudinal contact surface ratio. In certain embodiments, the pitch length of pitches or repeating units of tread geometry along the circumferential direction of the tire is within a certain range and the tread depth is below a specified value. Tires with treads having a configuration that falls within these design parameters exhibit a desirably good level of snow and dry traction.

Description of the Related Art

Those skilled in the art are familiar with the inherent compromise in designing a tire that has both good snow traction and good dry traction. For example, typical techniques for improving dry traction involve some increase to the rigidity of the sculpture so that the tire tends to grip the road surface more effectively. Also, the geometry of the tread itself can be altered so that the tread is more geometrically rigid. This can be accomplished in several ways including removing the void found in the tread such as sipes or lamelles and/or grooves. In treads that have ribs and/or tread blocks that are defined by grooves that are needed for wet traction and/or the prevention of hydroplaning, the depth of the tread may be decreased so that the tread becomes more rigid in the contact patch. When tread blocks are employed, the length of the tread block in the circumferential direction of the tire, which is the direction the tire rotates, may be increased.

On the other hand, a typical method for improving the snow traction of the tire has been to decrease the rigidity of the tread or sculpture of the tire. This can be done in several ways including adjusting the material properties of the tread compound such as its modulus. By decreasing the modulus of the tread compound, the tread becomes softer and more pliable, which allows the tread to better penetrate the snow and grip or adhere to a road surface. In addition, the geometry of the tread can be changed so that it becomes less rigid or more pliable. This can be achieved by the addition of void to the sculpture including sipes or lamelles and/or grooves to the tread. In treads that have ribs and/or tread blocks that are defined by grooves that are needed for wet traction and/or the prevention of hydroplaning, the depth of the tread may be increased so that the tread becomes less rigid in the contact patch and so that the grooves have more volume for the consumption of snow. When tread blocks are employed, the length of the tread block in the circumferential direction of the tire, which is the direction the tire rotates, may be decreased.

As can be seen, there is an obvious and strong compromise between these two performances and the associated compound properties and geometric configurations of the treads that are needed to optimize these performances. One prior art solution has been to use different treads for summer versus winter times. This solution requires the sale, manufacture and placement of summer tires in the spring timeframe and the sale, manufacture and placement of winter tires in the fall timeframe. While this is an excellent way of optimizing the tire performance, it has the significant drawback of cost and operational inefficiency. Put into other words, this costs the user and tire manufacturer a significant amount of money to buy, mount and manufacture two sets of tires for use on a vehicle during the calendar year. Accordingly, the design and sale of all season tires has gained in popularity over seasonal summer and winter tires.

However, this requires the tread of an all season tire to provide properties that are well suited for both dry and snow traction and overcome the difficulty of increasing either performance without deleteriously affecting the performance of the other for reasons set forth above. Typically, all season tires fail to provide snow and dry traction performances that are comparable to the predictably strong performances of seasonal tires.

Accordingly, it is desirable to find a construction for the tread of a tire that can break the snow and dry traction compromises so that an all season tire can be used during the entire calendar year that provides the desired level of performances that are comparable to that of a seasonal tire. In addition, it would be advantageous if the solution involved some sort of optimization of the geometrical configuration of the tread using the same tread compound.

Document WO2011/111394-A1 discloses a tire tread relevant with a particular sipe density and a particular relation of projected sipe length to pitch length.

SUMMARY OF THE INVENTION

An apparatus that comprises a tread for use with a tire defining lateral, longitudinal and radial directions, said tread having tread elements and sipes, lateral grooves and longitudinal grooves and an associated sipe density, lateral groove density and longitudinal CSR, wherein said sipe density is less than 40 mm$^{-1}$, said lateral groove density is greater than 35 mm$^{-1}$; and said longitudinal CSR is greater than .85.

The apparatus may also have a tread having a tread depth of less than 8.5 mm and may in fact be 8 mm.

In some cases, the tread further comprises pitches that have an associated pitch length wherein said pitch length ranges from 15 to 35mm. Preferably, the pitch length may range from 19-29 mm.

The tire using said tread may be a 205/55R16 sized tire.

In such a case, the tread may have two circumferential grooves that have a width that ranges from 8 to 10 mm. Also, its sipes may be spaced about 10 mm away from each other in the longitudinal direction of the tire. This tread may also have an additional two circumferential grooves that have a width that ranges from 3 to 5 mm.

In some cases, the tread elements are in the form of tread blocks.

In other applications, the longitudinal CSR is in fact .87.

In some cases, the lateral groove density is 38 mm$^{-1}$.

In yet another embodiment, the sipe density is 20 mm$^{-1}$.

In some embodiments in addition to the optimization of the sipe density, lateral groove density and the longitudinal CSR, there may also be a variation between the inter sipe distance in the shoulder region of the tire and the inter sipe distance in the central region of the tire. Particularly, the inter sipe distance measured between adjacent sipes found in the shoulder regions of the tire measured in the longitudinal direction may be greater than the inter sipe distance measured between adjacent sipes found in the central regions of the tire measured in the longitudinal direction. Also, there may be a chamfer found on a plurality of lateral grooves along their lateral edges.

The foregoing and other objects, features and advantages of the invention will be apparent from the following more detailed descriptions of particular embodiments of the invention, as illustrated in the accompanying drawing wherein like reference numbers represent like parts of the invention.

<u>DETAILED DESCRIPTION OF THE DRAWINGS</u>

FIG. **1** is a top view of a footprint of a PRIMACY MXV4 tire;

FIG. **2** is a top view of the footprint of FIG. **1** showing its contact patch and its associated area $A_c$ using cross-hatching;

FIG. **3** shows examples of pitches using the footprint of FIG. **1**;

FIG. **4** is an example of how the sipe density (SD) of a pitch is calculated using the pitch of FIG. **3**;

FIG. **5** is an example of how the lateral groove density (LGD) of a pitch is calculated using the pitch of FIG. **3**;

FIG. **6** is a top view of the footprint of FIG. **1** showing its longitudinal groove area $A_{long}$ using thin cross-hatching;

FIG. **7** shows the area represented by the quantity ($A_c$ - $A_{long}$) for the footprint of FIG. **1** using cross-hatching;

FIG. **8** is a top view of a footprint of a tire according to a first embodiment of the present invention;

FIG. **9** is a top view of the footprint of FIG. **8** showing its contact patch and its associated area $A_c$;

FIG. **10** shows an example of a pitch using the footprint of FIG. **8**;

FIG. **11** is an example of how the sipe density (SD) of a pitch is calculated using the pitch of FIG. **10**;

FIG. **12** is an example of how the longitudinal groove density (LGD) of a pitch is calculated using the pitch of FIG. **10**;

FIG. **13** is a top view of the footprint of FIG. **8** showing its longitudinal groove area $A_{long}$;

FIG. **14** shows the area represented by the quantity ($A_c$ - $A_{long}$) using cross-hatching for the footprint of FIG. **8**;

FIG. **15** is a graph showing that for a given lateral groove and sipe density, increasing the longitudinal CSR breaks the snow traction versus dry traction/braking compromise.

FIG. **16** is a partial top view of an actual tread that makes the footprint of FIG. **8**;

FIG. **17** is a partial perspective view of a tread according to a second embodiment of the present invention;

FIG. **18** is a partial top view of an actual tread of a tread according to a third embodiment of the present invention; and

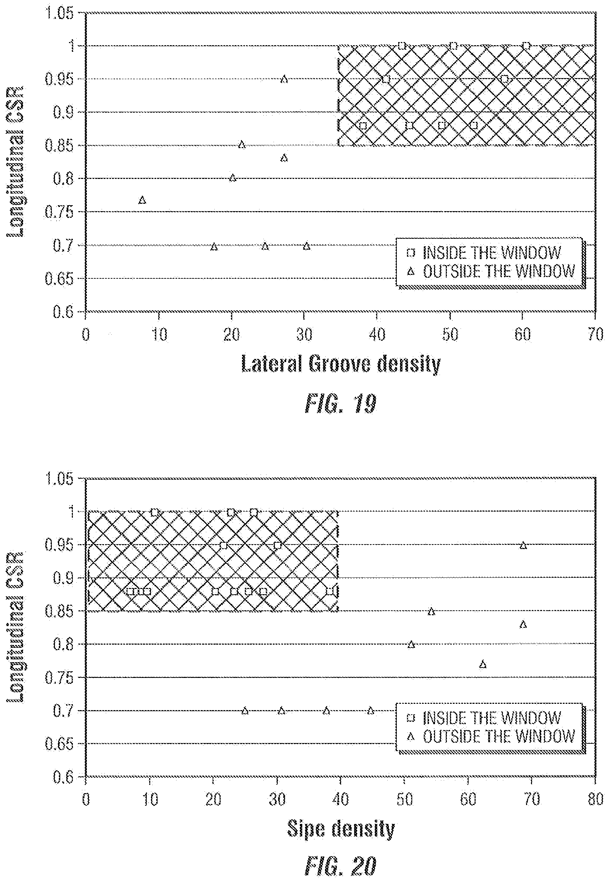

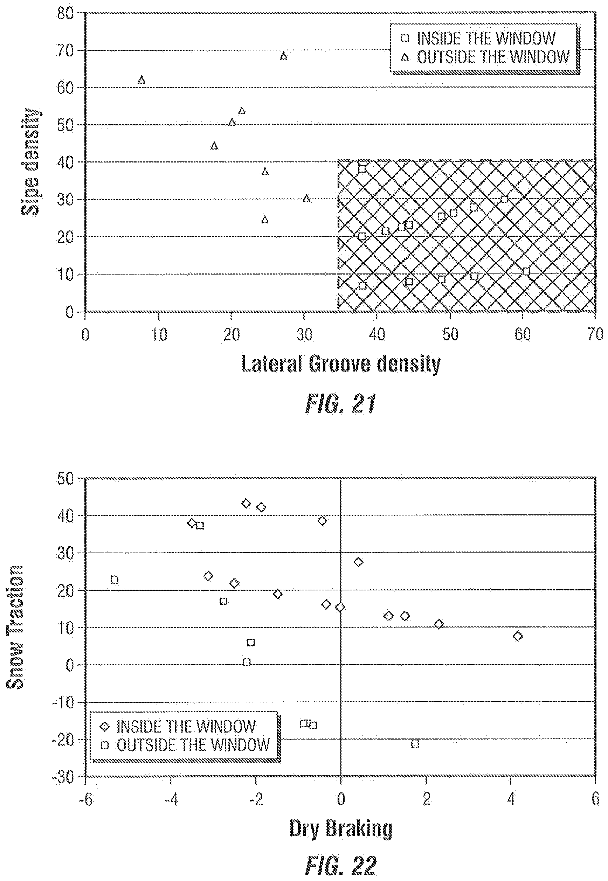

FIGS, **19** thru **22** show the groupings of scenarios that fall within the windows of optimized parameters of the present invention (FIGS. **19** thru **21**) and their associated predicted performances in dry braking and snow traction (FIG. **22**).

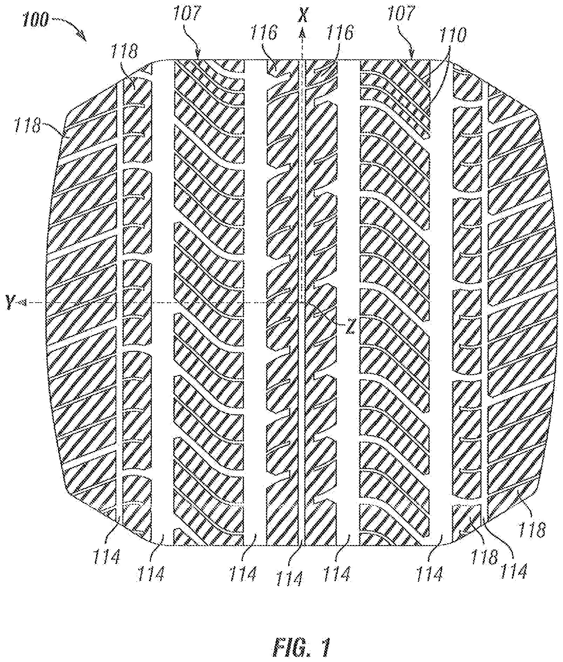

FIGS. **1** thru **14** are ink plots of the footprint of a tire that is under an operating load. It is to be understood, therefore; that the dimensions shown are slightly different than those of the tire in a non-deflected state. For the sake of clarity, all the values for the dimensions given that are associated with FIGS. **1** thru **14** are for the tire in a deflected state. For a passenger car, the measurements are taken for a footprint of a passenger car tire when said tire is loaded at 85% (2.41 bar) of the maximum load as marked on the tire sidewall at an inflation pressure of 35 psig. For a light truck tire, the measurements are taken for a footprint of a passenger car tire when said tire is loaded at 85% of the maximum load (single) as shown on the tire sidewall at the associated inflation pressure as marked on the tire sidewall.

<u>DEFINITIONS</u>

The longitudinal or circumferential direction, **X,** is the direction of the tire along which it rolls or rotates and that is perpendicular to the axis of rotation of the tire.

The lateral direction, **Y,** is the direction of the tire along the width of its tread that is substantially parallel to the axis of rotation of the tire.

The radial direction, **Z,** is the direction of a tire as viewed from its side that is parallel to the radial direction of the generally annular shape of the tire and is perpendicular to the lateral direction thereof.

By groove, it is meant any channel in the tread of a tire that has two opposing sidewalls that lead from the top surfaces of the tread and that are spaced apart by at least 2.0 mm, i.e. that the average distance separating the sidewalls between the top opening of the channel and the bottom thereof is on average 2.0 mm or more. By lateral groove, it is meant a groove that extends in a direction that is oblique to the longitudinal direction. By longitudinal groove, it is meant a groove that extends substantially in the longitudinal direction,

By a sipe, it is meant any incision that is less than 2.0 mm and has sidewalls that come into contact from time to time as the tread block or rib that contains the incision rolls into and out of the contact patch of the tire as the tire rolls on the ground.

By tread element, it is meant any type or shape of a structural feature found in the tread that contacts the ground. Examples of tread elements include tread blocks and ribs.

By rib, it is meant a tread element that runs substantially in the longitudinal direction **X** of the tire and that is not interrupted by any grooves that run in a substantially lateral direction **Y** or any other grooves oblique thereto.

By tread block, it is meant a tread element that has a perimeter that is defined by one or more grooves, creating an isolated structure in the tread.

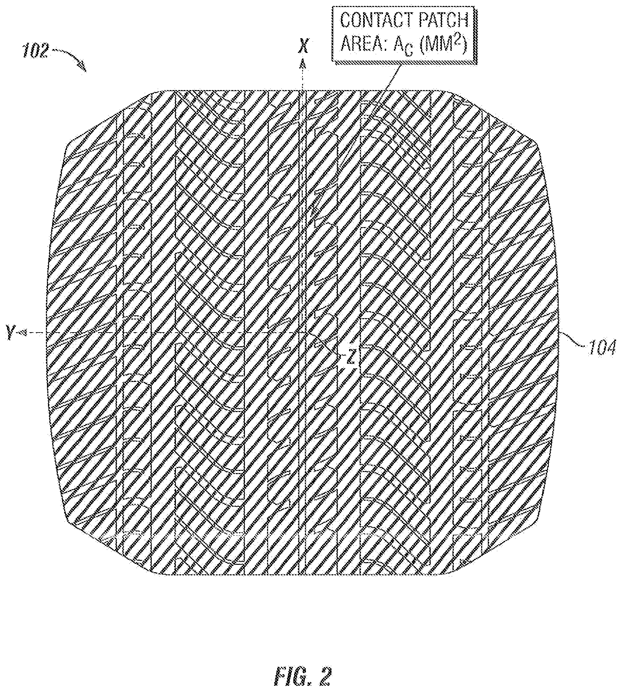

By footprint, it is meant the area of contact between the tire and ground or road surface as the tire rolls. Its area excludes those areas that do not actually touch the road or ground. A footprint **100** of a tire is shown by Figure **1** and is defined by the meandering perimeter of each tread element of the tread shown there. So, its area is equivalent to the area shown that is cross-hatched. By contrast, the contact patch **102** is defined by the outside perimeter of the area shown in Figure **2** designated by line **104** and is not defined by the amount of void found within the footprint. The area of the contact patch $A_c$ is the area surrounded by line **104** unaffected by any voids found therein as best seen in Figure **2.**

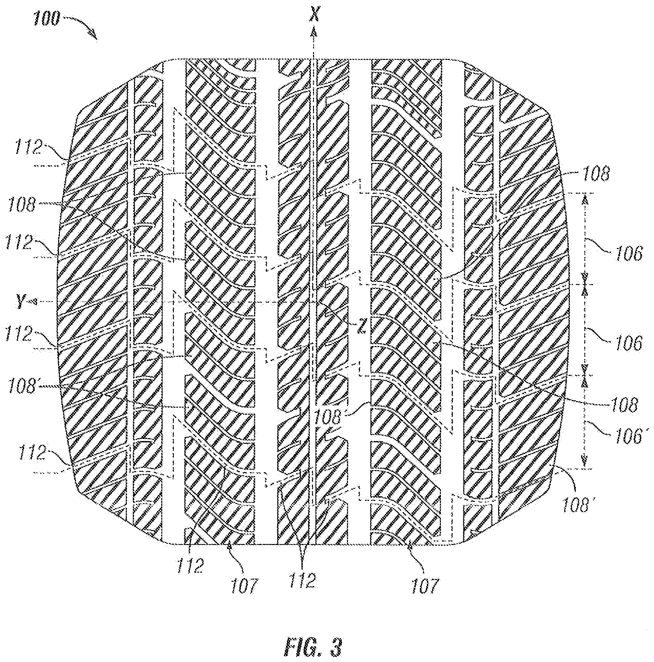

By pitch **106,** it is meant a repetitious geometrical pattern of a tire tread that is arranged in a circular array about the circumference of a tire. In many instances, these pitches are molded using identical mold components that are also arranged in a circular array about the circumference of a mold that forms and cures the geometry of the tire tread. See Figure 3 for an example of a pitch **106** in the footprint **100** of a tire. In some cases, the tread pattern of a tire can be composed of multiple unique geometrical patterns or pitches that are each duplicated around the circumference of the tire as is the case here. Note that a first pitch **106** is repeated twice and is adjacent another pitch **106'.** This difference between pitches is most noticeable by looking at the presence of two tread blocks **108'** in the intermediate rows **107** of tread blocks **109** of pitch **106'** while a single tread block **108** is in the same position for pitch **106.** This 2-1 pattern is repeated around the circumference of the tire.

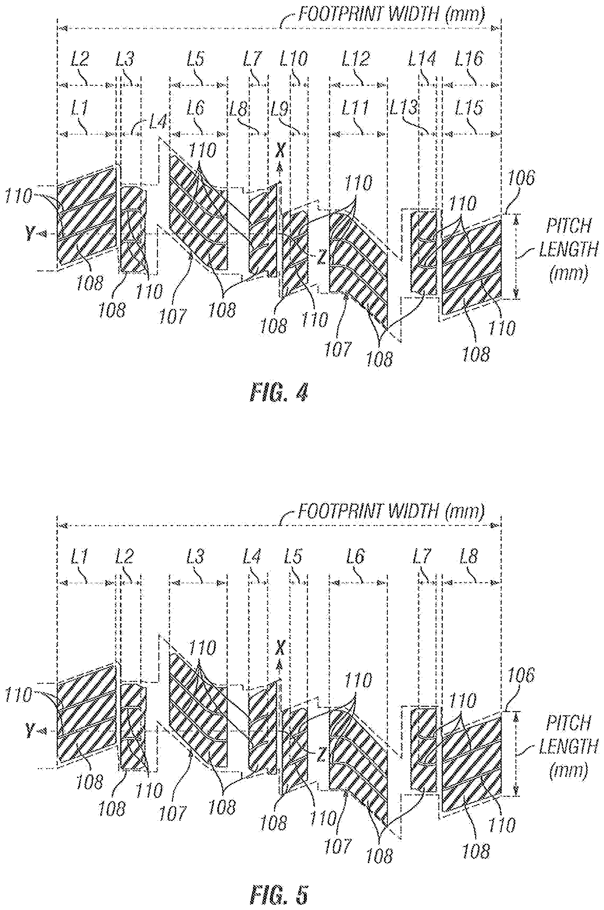

By sipe density (SD), it is meant the total projected length of the sipes ($L_s$) divided by the approximated area of the contact patch ($A_p$) of a single pitch irrespective of those areas that are not actually touching the ground, as for example, due to the presence of a void. As shown by Figure **4,** This approximated area ($A_p$) is calculated by multiplying the footprint width (FW), measured in the lateral **Y** direction from the leftmost extent of the footprint to the rightmost extent of the footprint, by the pitch length (PL), measured in the longitudinal direction **X** from the midpoint of one lateral groove **112** that forms the leading edge of the pitch to the midpoint of another lateral groove that forms the trailing edge of the pitch **112** as best seen in Figure **3.**

The projected length of the sipes ($L_s$) is calculated by summing their individual lengths. The projection is done along the **Z** direction onto the road surface or **X-Y** plane and the distances are measured in the **Y** direction. The length is measured in mm and the area is measured in mm$^2$ and the ratio is then multiplied by 1000. This is relationship can be expressed in terms of the following equation:

$$SD = \frac{\left(\sum_{i=1}^{n} L_i\right)}{FW \times PL} \times 1000 \qquad \text{Eq. 1}$$

where the units of the calculation are reciprocal mm. An example of this calculation is shown in Figure **4** where fifteen sipes **110,** designated by **L1** thru **L15,** are used to calculate the SD. Note that two sipes **108** are shown in each tread block **110** of the pitch **106** shown in Figure **4.**

In some cases, where the tread pattern is composed of different pitches, then the tread pattern Sipe Density is the weighted average of each pitch Sipe Density ($SD_w$) of the tread pattern. The weighing is based on the circumference percentage of a given pitch around the tread pattern. For example, in the situation where there are three different pitches used about the circumference of the tire, the weighted average may be computed using equation 2 below:

$$SD_w = \frac{\left(\sum_{i=1}^{n}\left(SD_i \times NP_i \times PL_i\right)\right)}{\sum_{i=1}^{n}\left(NP_i \times PL_i\right)} \qquad \text{Eq. 2.}$$

When there are three different pitches being used, then $SD_w$ is calculated as follows using the following data:

Length of Pitch 1: $PL_1$
Number of Pitch 1 : $NP_1$
Pitch 1 Sipe Density : $SD_1$ as calculated using Eq. 1
Length of Pitch 2: $PL_2$
Number of Pitch 2 : $NP_2$
Pitch 2 Sipe Density : $SD_2$ as calculated using Eq. 1
Length of Pitch 3; $PL_3$
Number of Pitch 3 : $NP_3$
Pitch 3 Sipe Density : $SD_3$ as calculated using Eq. 1, and equation 2 becomes:

$$SD_w = \frac{SD_1 \times NP_1 \times PL_1 + SD_2 \times NP_2 \times PL_2 + SD_3 \times NP_3 \times PL_3}{NP_1 \times PL_1 + NP_2 \times PL_2 + NP_3 \times PL_3}.$$

By way of further example, when these variables having the following values:

$PL_1$=35 mm, $NP_1$=20, $SD_1$=50, $PL_2$=30 mm, $NP_2$=25, $SD_2$=60, $PL_3$=25 mm, $NP_3$=30, $SD_3$=70; then the weighted $SD_w$ is calculated to be 60.23.

By lateral groove density (LGD), it is meant the total projected length of the lateral grooves ($L_1$) divided by the total area of the contact patch ($A_p$) of a single pitch irrespective of those areas that are not actually touching the ground, as for example, due to the presence of a void. This approximated area ($A_p$) is calculated by multiplying the footprint width (FW), measured in the lateral direction **Y,** by the pitch length (PL), measured in the longitudinal direction **X,** while the projected length of the lateral grooves is calculated by summing their individual lengths, all in like manner as described above for the sipe density (SD). The projection is done along the **Z** direction onto the road surface or **X-Y** plane and the distances are measured in the **Y** direction. The length is measured in mm and the area is measured in mm$^2$ and the ratio is then multiplied by 1000. This is relationship can be expressed in terms of the following equation:

$$LGD = \frac{\left(\sum_{i=1}^{n}\frac{G_i}{Y_i}\right)}{FW \times PL} \times 1000 \qquad \text{Eq. 3}$$

where the units of the calculation are reciprocal mm. An example of this calculation is shown in Figure **5** where eight lateral grooves, designated by G1 thru G8, are used to calculate the LGD. Note that the presence of these lateral grooves **112** is actually immediately adjacent the pitch shown in the forward or backward **X** direction. In other words, the lateral grooves are not actually shown but can be seen by following the line that defines either the forward most extent or rearward most extent of the pitch **106** shown in Figure **3**. Also, the calculation is performed for only one set of lateral grooves that define the pitch and not for both.

In some cases, where the tread pattern is composed of different pitches, then the tread pattern Lateral Groove Density is the weighted average of each pitch Lateral Groove Density of the tread pattern. The weighing is based on the circumference percentage of a given pitch around the tread pattern. For example, in the situation where there are three different pitches used about the circumference of the tire, the weighted average may be computed using equation 4 below:

$$LGD_w = \frac{\left(\sum_{i=1}^{n}\left(LGD_i \times NP_i \times PL_i\right)\right)}{\sum_{i=1}^{n}\left(NP_i \times PL_i\right)} \qquad \text{Eq. 4.}$$

When three different pitches are used, then $LGD_w$ is calculated as follows using the following data:

Length of Pitch 1: $PL_1$
Number of Pitch 1 : $NP_1$
Pitch 1 Lateral Groove Density : $LGD_1$ as calculated using Eq. 3
Length of Pitch 2: $PL_2$
Number of Pitch 2 : $NP_2$
Pitch 2 Lateral Groove Density : $LGD_2$ as calculated using Eq. 3
Length of Pitch 3: PL3
Number of Pitch 3 : $NP_3$
Pitch 3 Lateral Groove Density : $LGD_3$ as calculated using Eq. 3

$$LGD_w = \frac{LGD_1 \times NP_1 \times PL_1 + LGD_2 \times NP_2 \times PL_2 + LGD_3 \times NP_3 \times PL_3}{NP_1 \times PL_1 + NP_2 \times PL_2 + NP_3 \times PL_3} \qquad \text{Eq. 4}$$

By way of further example, when these variables have the following values:

PL$_1$=35 mm, NP$_1$=20, LGD$_1$=50, PL$_2$=30 mm, NP$_2$=25, LGD$_2$=60, PL$_3$=25 mm, NP$_3$=30 LGD$_3$=70, then the weighted LGD is calculated to be 60.23.

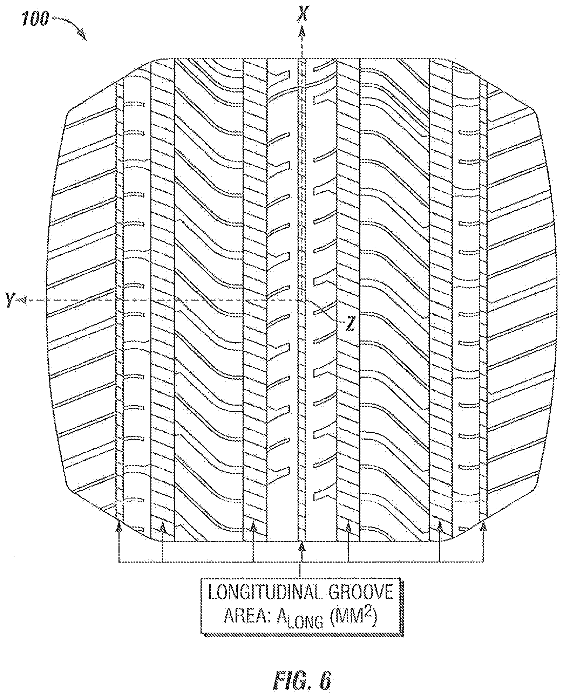

By longitudinal contact surface ratio (longitudinal CSR), it is meant the contact surface ratio of the longitudinal grooves. This is the total projected area of the longitudinal grooves ($A_{long}$) found in the contact patch at any one instance of time as the tire rolls divided by the total area of the contact patch ($A_c$) irrespective of those areas that are not actually touching the ground, as for example, due to the presence of a void (see Figure **6** for an example of $A_{long}$). The projection is done along the **Z** direction onto the road surface or **X-Y** plane. Both areas are measured in mm$^2$. This is relationship can be expressed in terms of the following equation:

$$\text{Longitudinal CSR} = (A_c \ \text{mm}^2 - A_{long} \ \text{mm}^2)/ A_c \ \text{mm}^2 \qquad \text{Eq. 5}$$

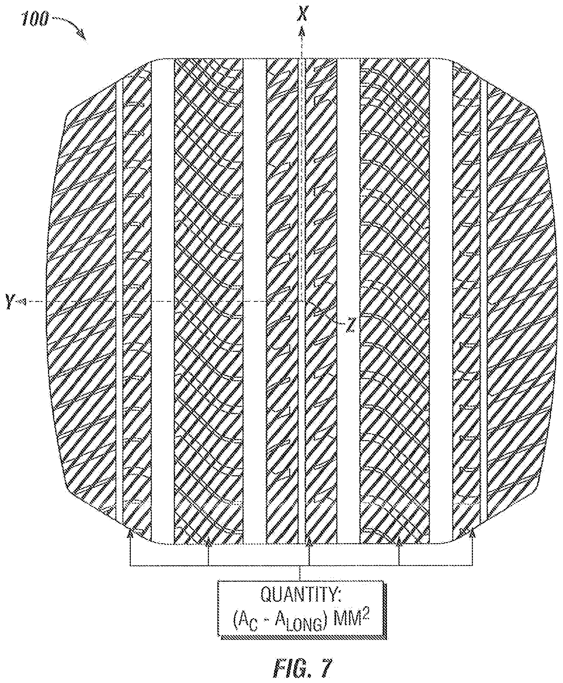

where the equation yields a dimensionless number. An example of the quantity of ($A_c$ mm$^2$-$A_{long}$ mm$^2$) for the footprint of Figure **1** is shown by the cross-hatched area in Figure **7**.

DETAILED DESCRIPTION OF PARTICULAR EMBODIMENTS

Embodiments of the present invention include constructions that modify the stiffness of the tread elements found on the tread of a tire in order to break the compromise found between snow and dry traction performances. It should be noted that one, all or any combination of the embodiments discussed below may be satisfactory to achieve these desired performances depending on the application. Also, these techniques can be used on a host of tread elements including tread blocks and ribs.

Looking again at Figure **1,** a top view of a footprint of a tire tread that has been previously used on an all season tire can be seen. This is a 205/55R16 sized tire currently sold by the assignee of the present invention under the trademark PRIMACY MXV4. This tire has six longitudinal grooves **114,** two intermediate rows **107** of tread blocks **108,** two central ribs **116** and four shoulder rows **118** of tread blocks **108.** The width of the longitudinal grooves ranges from 8 to 10 mm in the center of the tread and is about several millimeters for the grooves found in the shoulder of the tread and the distance between adjacent sipes **110** is on average about 8.5 mm in the longitudinal **X** direction.

Referring again to Figures **2** thru **7,** the components that are used to define and/or compute the design parameters defined above for this tire including sipe density, lateral groove density, and longitudinal CSR are shown. In Figure **2,** the total surface area or $A_c$ in the contact patch is shown as outlined by line **104** while Figure **3** defines the pitches for this tire that are repeated about its circumference. Figures **4** and **5** show the length portions used to measure the length of the sipes and lateral grooves. Figure **6** shows the surface area shown by the outline regions used to compute $A_{long}$. Finally, Figure **7** depicts the quantity of ($A_c$ mm$^2$ - $A_{long}$ mm$^2$) for the footprint of Figure **1** using a cross-hatched pattern. Note that the number of pitches and tread depth are not shown in any of the Figures for this tire.

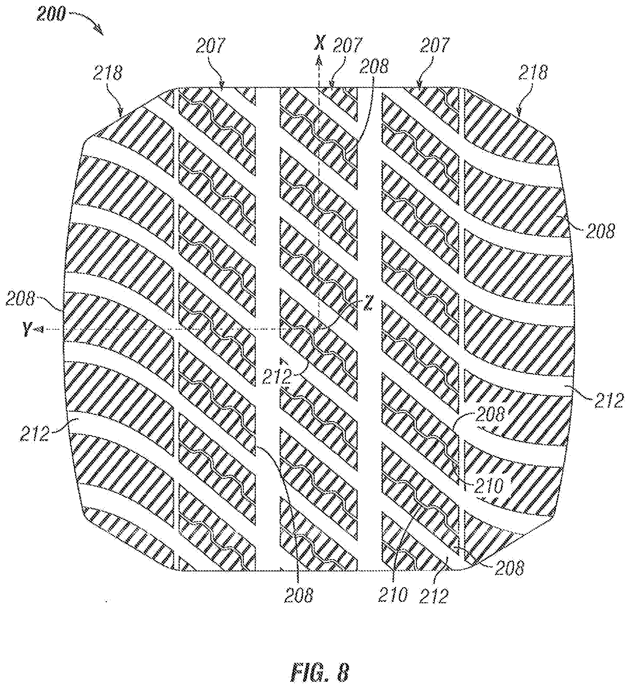

Figure **8,** to the contrary, shows the footprint **200** of an embodiment of the present invention. This tread is used in conjunction with a 205/55R16 sized tire and has three central rows **207** of tread blocks **208** and two shoulder rows of tread blocks **208** that are separated by four longitudinal grooves **214**. The width of the grooves is about 9 mm for the two central longitudinal grooves and about 3.5 mm for the outer two longitudinal grooves and the distance between a sipe **210** and an edge of the tread block **208** is about 10 mm in the longitudinal **X** direction. The tread blocks are further defines by lateral grooves **212** that have a general corkscrew orientation.

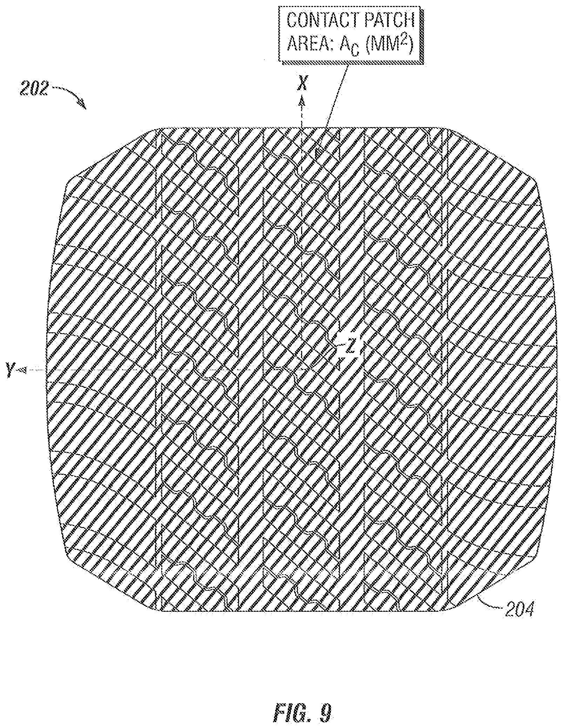

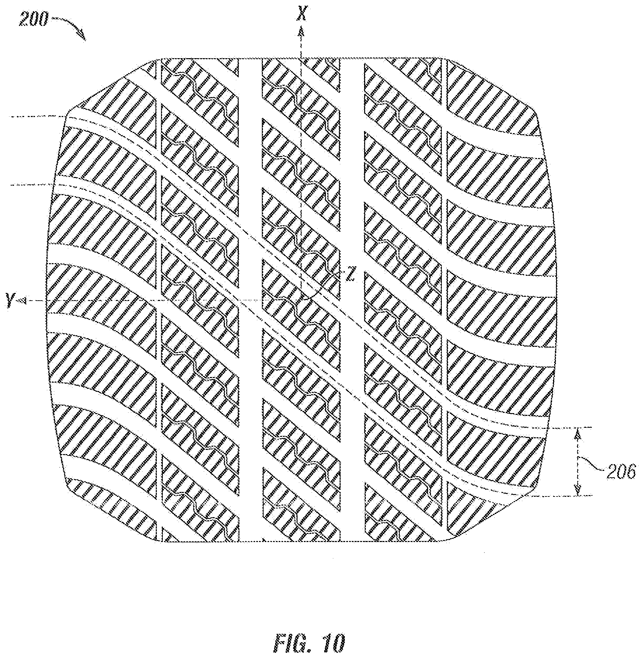

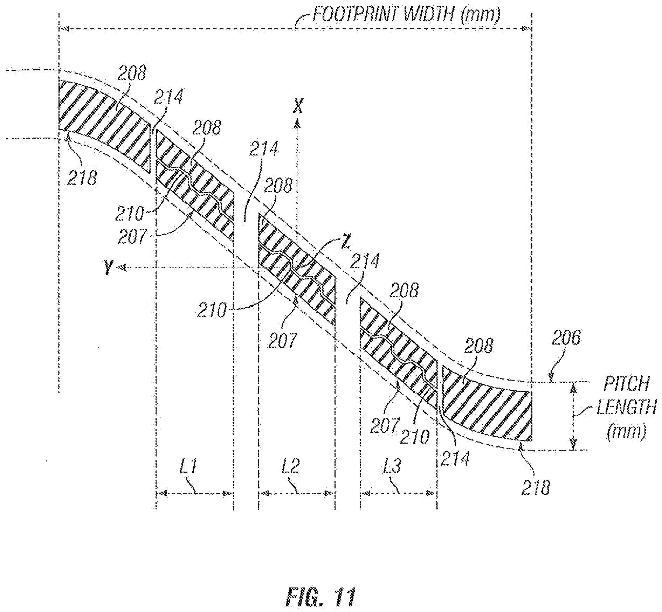

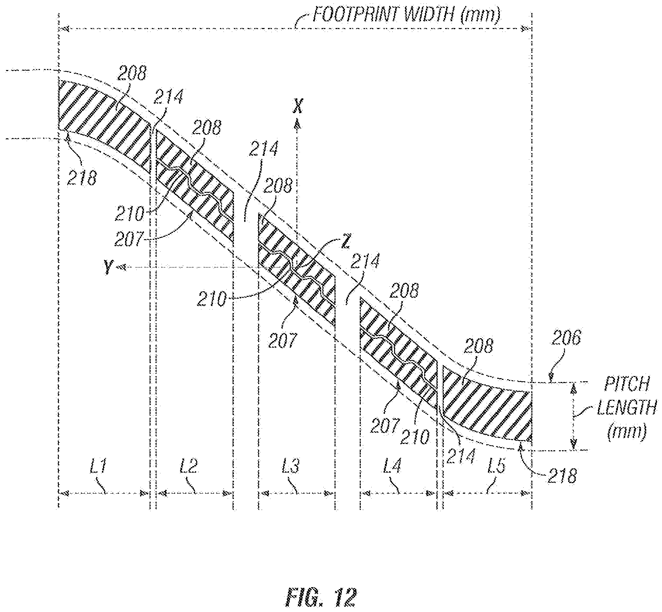

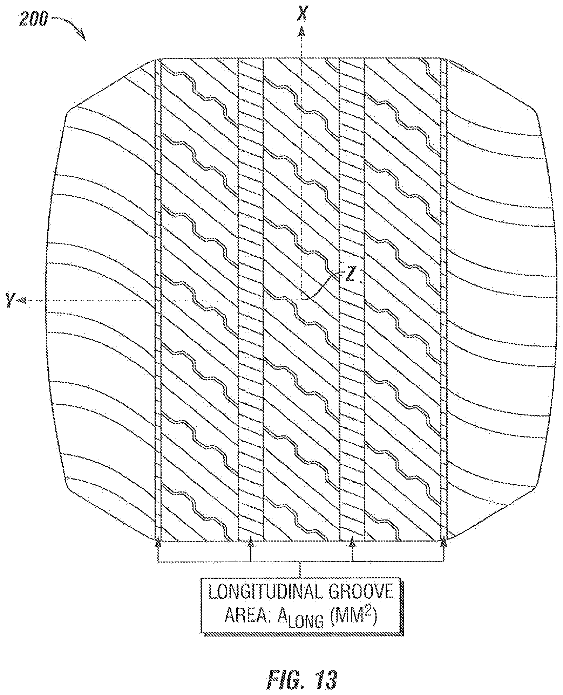

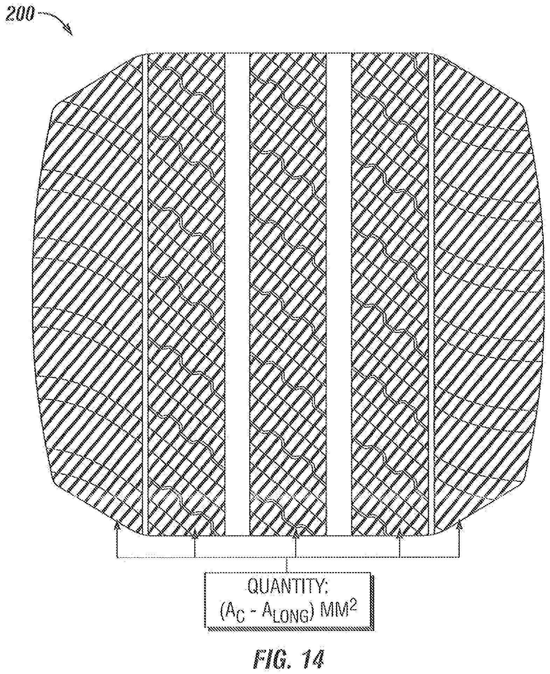

In like fashion as mentioned above, Figures **9** thru **14** show the components that are used to define and/or compute the design parameters defined above for this tire including sipe density, lateral groove density, and longitudinal CSR. In Figure **9**, the total surface area or $A_c$ in the contact patch **202** is shown as outlined by line **204** while Figure **10** shows the definition of a single pitch **206** for this tire. Unlike the PRIMACY MXV4, there is only a single pitch that is repeated around the entire circumference of the tire. Figures **11** and **12** show the length portions used to measure the length of the sipes **210** and lateral grooves. Figure **13** shows the surface area shown by the cross-hatched regions used to compute $A_{long}$. Finally, Figure **14** depicts the quantity of ($A_c$ mm$^2$ - $A_{long}$ mm$^2$) for the footprint of Figure **8** using a cross-hatched pattern. Note that the number of pitches and tread depth are not shown in any of the Figures for this tire.

The calculated values of these parameters for the prior art tread shown in Figure **1** and the tread configured according to an embodiment of the present invention as shown in Figure **8** are contained in Table 1 below. In addition to sipe density, groove density and longitudinal CSR, additional design parameters including the pitch length which is associated with each pitch or geometrical pattern that is repeated along the circumference of the tire in the **X** direction, as well as tread depth are also given. A lower tread depth improves dry braking but worsens snow traction. Decreasing the number of pitches or increasing the pitch length while maintaining longitudinal CSR is better for dry braking and worse for snow traction. In many cases, the mold components that make a pitch or repetitious geometrical pattern of a tire tread are identical so that multiple sets are used. Therefore, the number of pitches is usually equal to the number of identical mold components that are used to form the tread.

Since the PRIMACY MXV4 uses two different pitches that are arranged in 2-1 repeating sequence about its circumference while embodiment #1 only uses one pitch that is repeated about its circumference, the averaged sipe densities and lateral groove densities of the PRIMACY MXV4 tire were calculated in a weighted fashion using equations 2 and 4 respectively while the sipe density and lateral groove density of embodiment #1 were calculated using equations 1 and 3 respectively. Consequently, it is contemplated that tires with multiple pitches having different configurations would have their sipe densities and lateral groove densities calculated using the weighted average methodology similar to equations 2 and 4 and these values would determine their performance and whether they are covered by the appended claims.

Table 1

| Design Parameters | PRIMACY MXV4 | Embodiment #1 |
|---|---|---|
| Pitch Length (mm) | 30.5* | 23.1* |
| Tread Depth (mm) | 9 | 8 |
| Longitudinal CSR | .83 | .87 |
| Lateral Groove Density (mm$^{-1}$) | 27 | 38 |
| Sipe Density (mm$^{-1}$) | 61 | 20 |
| *Correction of typographical error in parent application. | | |

As can be seen, the previous tire has a longer pitch length, roughly the same tread depth, lower longitudinal CSR, lower lateral groove density, and higher sipe density than the first embodiment of the present invention discussed herein. Looking at the respective figures that show graphically the components that make up these parameters, the contrast between these tires in the geometrical configuration of their treads is apparent. For example, the distance between the lateral grooves for embodiment #1 is less than for the PRIMACY MXV4 tire. In fact, it is believed by the inventor(s) that the PRIMACY MXV4 tire is representative of the prior art and was chosen accordingly as a reference tire. Research conducted by the inventors indicates that typical all season tires that are currently on the market have a pitch length that is greater than 35 mm, a lateral groove density that is less than 30 and a longitudinal CSR that is less than .85. As evidenced below, altering one or more of these parameters has yielded critical and unexpected results.

Both the PRIMACY MXV4 tire and the tire according to the first embodiment of the present invention were tested in dry braking and snow traction. More precisely, they were tested for dry braking by measuring the distance necessary to brake from 60 MPH to 0 MPH for a vehicle that has tires mounted on it for testing. This test is performed on a dry asphalt surface upon sudden braking. A value greater than that of a reference tire, which is arbitrarily set to 100, indicates an improved result, *i.e,* a shorter breaking distance and improved dry grip. The snow traction was measured by using the GM spin test that is well known in the art (also known as ASTM F1805). The test results are shown below in Table 2. Unexpectedly to one with ordinary skill in the art, an increase in both dry braking of about 4% and snow traction of about 28% were achieved. Not only is the amount of improvement unexpected, especially the increase of 28% in snow traction, but the fact that both dry and snow traction were improved simultaneously shows that the critical result of breaking the snow and dry traction compromise was achieved, at least in part, by altering these design parameters.

Table 2

| Performance | PRIMACY MXV4 | Embodiment 1 |
| --- | --- | --- |
| Dry Braking | 100 | 104 |
| Snow Traction | 100 | 128 |

The inventor(s) believe that by altering the design parameters, particularly, increasing the longitudinal CSR, increasing the lateral groove density and decreasing the sipe density that the necessary void for consuming snow and for providing a pliable tread that increases snow traction can be used without negatively impacting dry traction. Instead of using a great deal of sipes which negatively impacts dry traction, fewer sipes are used and more grooves. Thus, the sculpture was suitably rigid, having a low sipe density while also having enough void for the consumption of snow. Consequently, dry traction was not affected in a deleterious manner but was actually improved while at the same time snow traction was also improved.

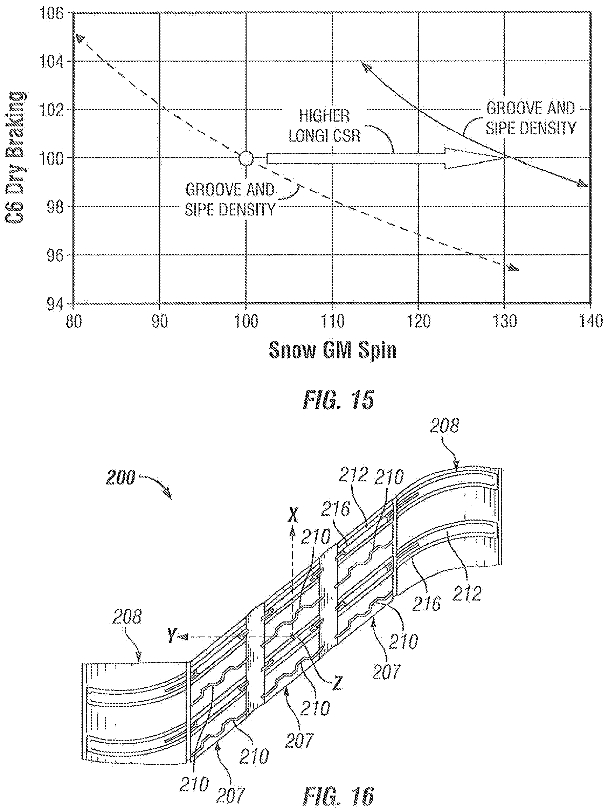

Looking now at Figure **15,** the way the snow traction and dry traction /braking compromise has been broken can be more clearly seen. This graph shows that for a given lateral groove and sipe density, there is close to a linear relationship between snow and dry traction. This means, for a given lateral groove and sipe density, depending on the dimensions and locations of the grooves and sipes, there is a strong compromise between dry and snow traction such that by improving one performance, the other is deleteriously affected. However, by increasing the longitudinal CSR, this linear relationship is shifted to the right as shown in the graph, breaking this compromise and improving snow traction while maintaining dry traction/braking. Having a first order effect, the tread rigidity is proportional to the reciprocal of the sum of the sipe and groove densities. Since the efficiency of a groove is higher than the efficiency of a sipe for snow traction, increasing the lateral groove density and longitudinal groove CSR and decreasing the sipe density increases snow performance, while at the same time dry performance is also improved due to the increase in the rigidity of the tread.

In actuality, this improvement is attributable to additional features of the tread other than simply the sipe density, lateral groove density and longitudinal CSR optimization alone. Turning to Figure **16** where a portion of the actual tread **200** of the first embodiment is shown for example, the tread also has variation in the distance between the sipes **210** found in the central portions of the tire tread in the circumferential direction **X,** which in this case is the central rows of tread blocks **207,** and in the shoulder portions of the tire tread, which in this case is the shoulder rows of tread blocks **208.** In particular, it is desirable to have a greater distance between adjacent sipes in the longitudinal direction **X** in the shoulder regions than in the central region of the tread. As mentioned previously, the distance between sipes is approximately 10 mm in the longitudinal direction **X** of the tread. Notice that there are no sipes in the shoulder portions, which is equivalent to having an infinite distance between sipes. This increase in the distance between sipes in the shoulder regions of the tire has a positive impact on snow traction without deleteriously affecting the dry braking performance. It is ideal if the distance between sipes found in the central portion of the tread be at least half of that as compared to the shoulder portion of the tread.

In like fashion, another feature is present that helps to improve both dry braking and snow traction. This feature is the addition of chamfers **216** to the lateral edges of the lateral grooves **214** of the tire. It is ideal if the chamfers forms a 45 degree angle with the tangent of the circumference of the tire and that it has a 1.5 mm x 1.5 mm configuration wherein the length of the chamfer is measured in a direction that is perpendicular to the sweep axis of the lateral groove and the depth is measured in the **Z** direction. In order to optimize the snow traction improvement, it is ideal that the width of the lateral groove, measured in a direction that is perpendicular to the sweep axis of the groove, be between 2 to 4 mm. More information regarding this technique can be found in published patent application no. WO2011062595(A1), which is commonly owned by the assignee of the present invention.

Using simulation tools, the inventors of the present invention have determined the relative contribution to the snow and dry tractions provided by the variation in inter sipe distance between central and shoulder portions of the tire and the chamfer features and subtracted them from the observed tested performances so that the actual contribution provided by optimizing the sipe density, lateral groove density and longitudinal CSR can be calculated. Table 3 below gives this information.

Table 3

| Performance | Primacy MXV4 | Embodiment #1 (Tested) | Variation in Inter Sipe Distance Effect (Calculated) | Chamfer Effect (Calculated) | Embodiment #1 Adjusted (Calculated) |
|---|---|---|---|---|---|
| Dry Braking | 100 | 104 | 0 | 2.5 | 101.5 |
| Snow Traction | 100 | 128 | 5 | 10 | 113 |

As can be seen, the largest gain in snow traction of 13% and second largest gain in dry traction of 1.5% have been achieved by the optimization of the sipe density, lateral groove density and longitudinal CSR. Also, both dry braking and snow traction were improved simultaneously, indicating that the present invention does break the snow and dry tractions compromise, which is a surprising result.

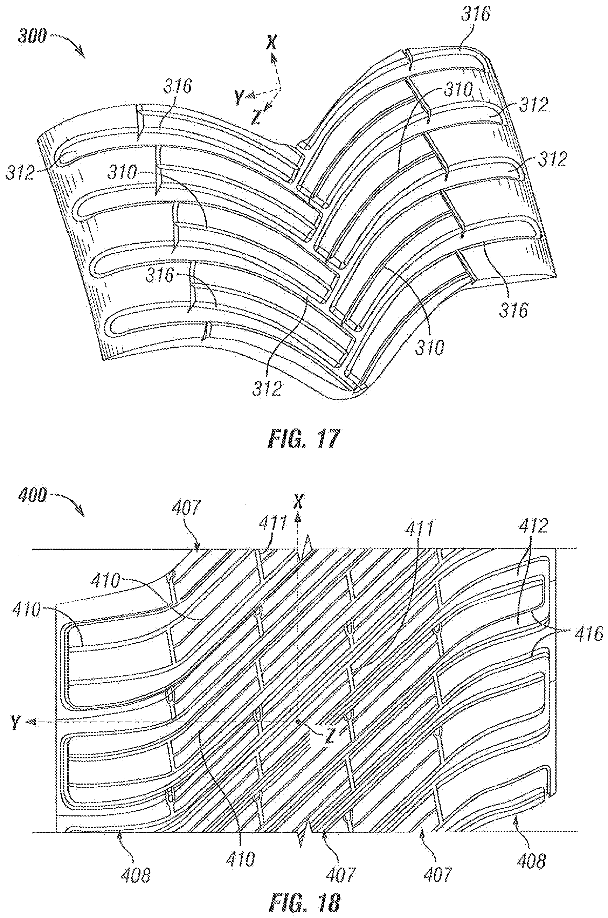

Figure **17,** shows a second embodiment of a tread **300** of the present invention that is a 205/55R16 sized tire that uses a chevron pattern of lateral grooves **312** that have no sipes in the shoulder regions and no longitudinal grooves whatsoever. The width of the lateral grooves ranges from 2.5 mm to 6 mm and the sweep angle that they form with the circumferential direction near the center of the tire is approximately 45 degrees and the angle they form near the shoulder regions is approaching 90 degrees. The lateral grooves **312** also have chamfers **316** configured similarly to what has been described for the first embodiment. Finally, the distance from a sipe **310** to the edge of a tread block or lateral groove is approximately 9.5 mm in the longitudinal direction **X.** The relative comparison of design parameters calculated as defined above between the PRIMACY MXV4 tire and the second embodiment is shown below in Table 4.

Table 4

| Design Parameters | PRIMACY MXV4 | Embodiment #2 |
|---|---|---|
| Pitch Length (mm) | 30.5* | 24.8* |
| Tread Depth (mm) | 9 | 7 |
| Longitudinal CSR | .83 | 1 |
| Lateral Groove Density (mm$^{-1}$) | 27 | 40 |
| Sipe Density (mm$^{-1}$) | 61 | 27 |
| *Correction of typographical error in parent application.* | | |

As can be seen, there is a significant difference between the sipe density, lateral groove density and longitudinal CSR for these respective tires. Testing of the second embodiment was conducted and its snow and dry traction performances were compared to that of the PRIMACY MXV4 tire and the relative contributions of the various features to the improvement in both performances were calculated in a similar manner that was used for the first embodiment above. This data is provided below by Table 5.

Table 5

| Performance | Primacy MXV4 | Embodiment #2 (Tested) | Variation in Inter Sipe Distance Effect (Calculated) | Chamfer Effect (Calculated) | Embodiment #2 Adjusted (Calculated) |
|---|---|---|---|---|---|
| Dry Braking | 100 | 108.5 | 0 | 3.5 | 105 |
| Snow Traction | 100 | 163 | 4 | 9 | 150 |

This embodiment had as its highest gains for both dry traction and snow traction at 5% and 50% those that are attributable to the optimization of the sipe density, lateral groove density and longitudinal CSR. Again, the snow and dry traction compromise has been shown to be broken as both performances have improved simultaneously and a gain of 50% in snow traction is surprisingly high. Therefore, these results are critical and surprising to one with ordinary skill in the art.

Yet a third embodiment is shown by Figure 18. This embodiment comprises a tread 400 for a 205/55R16 sized tire that has corkscrew oriented lateral grooves 412, a series of angled lateral grooves 414 that connect some of the corkscrew lateral grooves 412, chamfers 416 on a plurality of lateral grooves 412, and an inter sipe 410 distance in the shoulder rows 408 of tread blocks of 12 mm and and inter sipe 410 distance in the central rows 407 of tread blocks of 7.5 mm. The width of the lateral grooves ranges from 2.5 mm to 8 mm. The relative comparison of design parameters calculated as defined above between the PRIMACY MXV4 tire and the third embodiment is shown below in Table 6.

Table 6

| Design Parameters | PRIMACY MXV4 | Embodiment #3 |
|---|---|---|
| Pitch Length (mm) | 30.5* | 19.5* |
| Tread Depth (mm) | 9 | 9 |
| Longitudinal CSR | .83 | 1 |
| Lateral Groove Density (mm$^{-1}$) | 27 | 50 |
| Sipe Density (mm$^{-1}$) | 61 | 35 |
| *Correction of typographical error in parent application. | | |

Again, there is a significant difference between the sipe density, lateral groove density and longitudinal CSR for these respective tires. Testing of the third embodiment was conducted and its snow and dry traction performances were compared to that of the PRIMACY MXV4 tire and the relative contributions of the various features to the improvement in both performances were calculated in a similar manner that was used for the first embodiment above. This data is provided below by Table 7.

Table 7

| Performance | Primacy MXV4 | Embodiment#3 (Tested) | Variation in Inter Sipe Dist. Effect (Cal.) | Chamfer Effect (Cal.) | Embodiment #3 Adjusted (Cal.) |
|---|---|---|---|---|---|
| Dry Braking | 100 | 99 | 0 | 2.5 | 96.5 |
| Snow Traction | 100 | 166 | 7 | 10 | 149 |

Looking at these results, it appears that by using all three sets of features, that dry braking was essentially maintained and that snow traction was increased by 66%. This makes this tire a good candidate for someone who needs good snow traction and can accept no improvement in dry braking. However, the adjusted numbers indicate that this embodiment lost 3.5% in dry braking due to the optimization of the sipe density, lateral groove density and longitudinal CSR. This decrease is attributable in part due to the increased tread depth of 9 mm as compared to the lower tread depths of the first and second embodiments. Despite this, the optimization of the present invention provided a 49% improvement in snow traction. This large increase in snow traction is still surprising to one with ordinary skill in the art.

Using the same simulation tools above, the inventors determined a window of parameters that would give these surprising results by mapping out various scenarios having specified longitudinal CSR, sipe density, and lateral groove density while maintaining other design parameters the same such as CSR and tread depth. These scenarios were then plotted on a graph showing their respective snow traction and dry braking performances.

Looking at Figures 19 thru 22, it can be seen that it is possible to improve snow and dry traction of a tire tread when the lateral groove density is greater than 35 mm$^{-1}$, sipe density is less then 40 mm$^{-1}$, and the longitudinal CSR is greater than .85. These figures show that when these parameters are within these ranges, then an improvement in snow traction is almost always achieved and that it many instances, dry braking is also improved, breaking the snow traction and dry braking comprising (best seen in Figure 22). This can be seen by looking at the correlation of those date points that fall within the windows of the present invention and those that fall outside the windows of the present invention. In those cases when dry braking is slightly negatively impacted, this can be negated by adding other features such as using a variation in the inter sipe distance between the central and shoulder regions of the tire and/or adding chamfers to the lateral grooves as was the case for embodiment #3. The inventors also believe that it is helpful if the average pitch length of the pitches or repetitions of identical tread geometry patterns is between 15 and 35 mm, and preferably between 19 and 29 mm, and the tread depth is less than 8.5 mm for reasons previously given.

As can be seen, certain embodiments of the present invention help to break the compromise between dry and snow performances either in combination or by themselves. Accordingly, different combinations of embodiments discussed herein are envisaged by the inventor and are considered part of this disclosure and may be useful for different tire applications. For example, only having specified ranges of values of the longitudinal CSR, sipe density, and lateral groove densities may be sufficient to practice the present invention.

While this invention has been described with reference to particular embodiments thereof, it shall be understood that such description is by way of illustration and not by way of limitation. For example, the present invention could be combined with material properties of the tread rubber to yield further improvements. Similarly, this invention can be applied to tires having all sorts of tread elements including ribs and tread blocks. Furthermore, particular dimensions have been given but it is well within the purview of one skilled in the art to make adjustments to these dimensions.

**Claims**

1. A tire that comprises a tread defining lateral, longitudinal and radial directions, said tread having tread elements and sipes, lateral grooves and longitudinal grooves arranged in one or more pitches around the tire and having

   a sipe density of less than 40 mm$^{-1}$, the sipe density defined as a weighted average of a sipe density of the one or more pitches, the sipe density of a single of the one or more pitches being expressed as

$$SD = \frac{\left(\sum_{i=1}^{n} L_i\right)}{FW \times PL} \times 1000$$

   wherein n is the number of sipes in the single pitch, $L_i$ is a projected length of each of the sipes, FW is a lateral width of the tire footprint and PL is a longitudinal length of the pitch as measured between midpoints of lateral grooves that define the pitch;
   a lateral groove density that is greater than 35 mm$^{-1}$, the lateral groove density defined as a weighted average of a lateral groove density of the one or more pitches, the lateral groove density of a single of the one or more pitches being expressed as

$$LGD = \frac{\left(\sum_{i=1}^{n} G_i\right)}{FW \times PL} \times 1000$$

   wherein n is the number of lateral grooves forming one side of the single pitch and $G_i$ is a projected length of each of the lateral grooves; and
   a longitudinal contact surface ratio (CSR) that is greater than 0.85, the CSR expressed as

$$\text{Longitudinal CSR} = (A_c \ mm^2 - A_{long} \ mm^2) / A_c \ mm^2$$

   wherein $A_c$ is a total area of the tire contact patch and $A_{long}$ is a total projected area of the tire longitudinal groove in $A_c$.

2. The tire of claim 1 wherein said tread further comprises a tread depth of less than 8.5 mm.

3. The tire of claim 1 wherein said tread further comprises a plurality of pitches and an associated average pitch length, wherein said pitch ranges between 15 and 35 mm.

**4.** The tire of claim 1 wherein said tread is used with a 205/CSR16 sized tire.

**5.** The tire of claim 4 wherein said tread has two circumferential grooves that have a width that ranges from 8 to 10 mm.

**6.** The tire of claim 5 wherein said tread has sipes that are spaced about 10 mm away from each other in the longitudinal direction of the tire.

**7.** The tire of claim 6 wherein said tread has two circumferential grooves that have a width that ranges from 3 to 5 mm.

**8.** The tire of claim 1 wherein the tread has tread elements in the form of tread blocks.

**9.** The tire of claim 2 wherein the tread depth is 8 mm.

**10.** The tire of claim 3 wherein the pitch length is 29 mm.

**11.** The tire of claim 1 wherein the longitudinal CSR is .87.

**12.** The tire of claim 1 wherein the lateral groove density is 38 mm$^{-1}$.

**13.** The tire of claim 1 wherein the sipe density is 20 mm$^{-1}$.

**14.** The tire of claim 1 wherein the inter sipe distance between adjacent sipes in the shoulder region of the tread measured in the longitudinal direction is greater than the inter sipe distance between adjacent sipes in the central region of the tread measured in the longitudinal direction.

**15.** The tire of claim 1 wherein a plurality of lateral grooves have chamfers located along their lateral edges.

**Patentansprüche**

**1.** Reifen, der eine Lauffläche umfasst, die Quer-, Längs- und Radialrichtungen definiert, wobei die Lauffläche Laufflächenelemente und Lamellen aufweist, wobei Quernuten und Längsnuten in einem oder mehreren Profilelementen um den Reifen angeordnet sind, und die Folgendes aufweist:

eine Lamellendichte von weniger als 40 mm$^{-1}$, wobei die Lamellendichte als gewichteter Durchschnitt einer Lamellendichte des einen oder der mehreren Profilelemente definiert ist, wobei die Lamellendichte eines einzelnen des einen oder der mehreren Profilelemente ausgedrückt wird als

$$SD = \frac{\left( \sum_{i=1}^{n} L_i \right)}{FW \times PL} \times 1000$$

wobei n die Anzahl der Lamellen in dem einzelnen Profilelement ist, $L_i$ eine projizierte Länge von jeder der Lamellen ist, FW eine Breite in Querrichtung der Reifenaufstandsfläche ist, und PL eine Länge in Längsrichtung des Profilelements ist, gemessen zwischen Mittelpunkten der Quernuten, die das Profilelement definieren; eine Quernutendichte, die größer als 35 mm$^{-1}$ ist, wobei die Quernutendichte als gewichteter Durchschnitt einer Quernutendichte des einen oder der mehreren Profilelemente definiert ist, wobei die Quernutendichte eines einzelnen des einen oder der mehreren Profilelemente ausgedrückt wird als

$$LGD = \frac{\left( \sum_{i=1}^{n} G_i \right)}{FW \times PL} \times 1000$$

wobei n die Anzahl der Quernuten ist, die eine Seite des einzelnen Profilelements bilden, und $G_i$ eine projizierte Länge von jeder der Quernuten ist; und

ein Kontaktflächenverhältnis (CSR) in Längsrichtung, das größer als 0,85 ist, wobei das CSR ausgedrückt wird als

$$\text{Längs-CSR} = (A_C \ mm^2 - A_{long} \ mm^2) \ / \ A_C \ mm^2$$

wobei $A_c$ eine Gesamtfläche der Reifenkontaktfläche ist und $A_{long}$ eine projizierte Gesamtfläche der Längsnut des Reifens in $A_c$ ist.

2. Reifen nach Anspruch 1, wobei die Lauffläche ferner eine Laufflächentiefe von weniger als 8,5 mm umfasst.

3. Reifen nach Anspruch 1, wobei die Lauffläche ferner mehrere Profilelemente und eine zugeordnete durchschnittliche Profilelementlänge umfasst, wobei das Profilelement im Bereich zwischen 15 und 35 mm liegt.

4. Reifen nach Anspruch 1, wobei die Lauffläche bei einem Reifen der Größe 205/55 R16 verwendet wird.

5. Reifen nach Anspruch 4, wobei die Lauffläche zwei umlaufende Nuten aufweist, die eine Breite im Bereich von 8 bis 10 mm haben.

6. Reifen nach Anspruch 5, wobei die Lauffläche Lamellen aufweist, die etwa 10 mm voneinander in Längsrichtung des Reifens beabstandet sind.

7. Reifen nach Anspruch 6, wobei die Lauffläche zwei umlaufende Nuten aufweist, die eine Breite im Bereich von 3 bis 5 mm haben.

8. Reifen nach Anspruch 1, wobei die Lauffläche Laufflächenelemente in Form von Laufflächenblöcken aufweist.

9. Reifen nach Anspruch 2, wobei die Laufflächentiefe 8 mm ist.

10. Reifen nach Anspruch 3, wobei die Profilelementlänge 29 mm ist.

11. Reifen nach Anspruch 1, wobei die Längs-CSR 0,87 ist.

12. Reifen nach Anspruch 1, wobei die Quernutendichte 38 mm$^{-1}$ ist.

13. Reifen nach Anspruch 1, wobei die Lamellendichte 20 mm$^{-1}$ ist.

14. Reifen nach Anspruch 1, wobei der Lamellenabstand zwischen benachbarten Lamellen im Schulterbereich der Lauffläche, in Längsrichtung gemessen, größer ist als der Lamellenabstand zwischen benachbarten Lamellen im mittleren Bereich der Lauffläche, in Längsrichtung gemessen.

15. Reifen nach Anspruch 1, wobei mehrere Quernuten Schrägen entlang ihren Seitenkanten aufweisen.

**Revendications**

1. Pneumatique comprenant une bande de roulement définissant des directions latérale, longitudinale et radiale, ladite bande de roulement comportant des éléments de bande et des lamelles, des rainures latérales et des rainures longitudinales disposées en un ou plusieurs pas autour du pneumatique et ayant

une densité de lamelles inférieure à 40 mm$^{-1}$, la densité de lamelles étant définie comme une moyenne pondérée d'une densité de lamelles du ou desdits pas, la densité de lamelles d'un seul desdits pas étant exprimée par

$$SD = \frac{\left(\sum_{i=1}^{n} L_i\right)}{FW \times PL} \times 1000$$

où n est le nombre de lamelles du pas simple, $L_i$ est une longueur projetée de chacune des lamelles, FW est une largeur latérale de l'empreinte du pneumatique et PL est une longueur longitudinale du pas, mesurée entre les points médians des rainures latérales qui définissent le pas ;
une densité de rainures latérales qui est supérieure à 35 $mm^{-1}$, la densité de rainures latérales étant définie comme une moyenne pondérée d'une densité de rainures latérales du ou desdits pas, la densité de rainures latérales d'un seul desdits pas étant exprimée par

$$LGD = \frac{\left(\sum_{i=1}^{n} G_i\right)}{FW \times PL} \times 1000$$

où n est le nombre de rainures latérales formant un côté du pas simple et $G_i$ est une longueur projetée de chacune des rainures latérales ; et
un rapport de surface de contact longitudinal (CSR) qui est supérieur à 0,85, le CSR étant exprimé par

$$CSR\ longitudinal = (A_c\ mm^2 - A_{long}\ mm^2)/A_c\ mm^2$$

où $A_c$ est une aire totale de l'aire de contact du pneumatique et $A_{long}$ est une aire projetée totale de la rainure longitudinale du pneumatique dans $A_c$.

2. Pneumatique selon la revendication 1, dans lequel ladite bande de roulement comprend en outre une profondeur de bande inférieure à 8,5 mm.

3. Pneumatique selon la revendication 1, dans lequel ladite bande de roulement comprend en outre une pluralité de pas et une longueur de pas moyenne associée, dans lequel ledit pas est compris dans l'intervalle de 15 à 35 mm.

4. Pneumatique selon la revendication 1, dans lequel ladite bande de roulement est utilisée avec une taille de pneumatique de 205/55R16.

5. Pneumatique selon la revendication 4, dans lequel ladite bande de roulement comporte deux rainures circonférentielles qui ont une largeur comprise dans l'intervalle de 8 à 10 mm.

6. Pneumatique selon la revendication 5, dans lequel ladite bande de roulement a des lamelles qui sont espacées d'environ 10 mm les unes des autres dans la direction longitudinale du pneumatique.

7. Pneumatique selon la revendication 6, dans lequel ladite bande de roulement comporte deux rainures circonférentielles qui ont une largeur comprise dans l'intervalle de 3 à 5 mm.

8. Pneumatique selon la revendication 1, dans lequel la bande de roulement a des éléments de bande de roulement sous la forme de pavés.

9. Pneumatique selon la revendication 2, dans lequel la profondeur de la bande de roulement est de 8 mm.

10. Pneumatique selon la revendication 3, dans lequel la longueur de pas est de 29 mm.

11. Pneumatique selon la revendication 1, dans lequel le CSR longitudinal vaut 0,87.

12. Pneumatique selon la revendication 1, dans lequel la densité de rainures latérales est de 38 $mm^{-1}$.

**13.** Pneumatique selon la revendication 1, dans lequel la densité de lamelles est de 20 mm$^{-1}$.

**14.** Pneumatique selon la revendication 1, dans lequel la distance entre lamelles entre les lamelles adjacentes dans la région d'épaulement de la bande de roulement mesurée dans la direction longitudinale est supérieure à la distance entre lamelles entre les lamelles adjacentes dans la région centrale de la bande de roulement mesurée dans la direction longitudinale.

**15.** Pneumatique selon la revendication 1, dans lequel une pluralité de rainures latérales ont des chanfreins situés le long de leurs bords latéraux.

FIG. 1

*FIG. 2*

FIG. 3

FIG. 4

FIG. 5

FIG. 6

QUANTITY:
$(A_C - A_{LONG})$ MM$^2$

FIG. 7

FIG. 8

*FIG. 9*

FIG. 10

*FIG. 11*

FIG. 12

FIG. 13

QUANTITY:
$(A_C - A_{LONG})$ MM$^2$

FIG. 14

**FIG. 15**

**FIG. 16**

FIG. 17

FIG. 18

FIG. 19

FIG. 20

FIG. 21

FIG. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011111394 A1

- WO 2011062595 A1